# EUROPEAN PATENT APPLICATION

(11) **EP 4 521 701 A1**
(43) Date of publication of application: **12.03.2025**
(21) Application number: 23810932.6
(22) Date of filing: 18.05.2023
(51) Int. Cl.: H04L 45/00

(54) **SEGMENT ROUTING POLICY PROCESSING METHOD AND APPARATUS**

(30) Priority: 25.05.2022 CN 202210576184
(71) Applicant: Huawei Technologies Co., Ltd., Shenzhen, Guangdong 518129 (CN)
(72) Inventor: YANG, Fan, Shenzhen, Guangdong 518129 (CN); DONG, Jie, Shenzhen, Guangdong 518129 (CN); FANG, Sheng, Shenzhen, Guangdong 518129 (CN)
(74) Representative: Pfenning, Meinig & Partner mbB
(86) International application number: PCT/CN2023/094919
(87) International publication number: WO 2023/226859

(57) **Abstract**

This application discloses a segment routing policy processing method and apparatus. A first network device obtains an SR policy, where the SR policy includes identification information, and the identification information indicates a type of at least one of the SR policy, a candidate path in the SR policy, and a segment list in the candidate path. The first network device determines, based on the identification information, a type related to the SR policy, and further determines a processing behavior that matches the type. In other words, the first network device may determine different processing behaviors based on the identification information in the SR policy, to implement service transmission by using the determined processing behavior, without performing service transmission by using a single processing behavior. This improves flexibility and diversity of service processing.

## Description

This application claims priority to Chinese Patent Application No. 202210576184.0, filed on May 25, 2022 and entitled "SEGMENT ROUTING POLICY PROCESSING METHOD AND APPARATUS", which is incorporated herein by reference in its entirety.

### TECHNICAL FIELD

This application relates to the field of communication technologies, and in particular, to a segment routing policy processing method and apparatus.

### BACKGROUND

A segment routing (segment routing, SR) policy (Policy) is a new tunneling and traffic steering technology developed based on an SR technology. The SR policy includes three parts: a headend (a node that generates the SR policy), a color (indicating quality of service requirements of different services), and an endpoint (a destination address of the SR policy). The SR policy path is represented as a segment list (Segment List) of a specified path, which is referred to as an SID list (Segment ID List). Each SID list is an end-to-end path from a source to a destination and indicates a device in a network to follow the specified path. If a data packet is steered into the SR policy, the SID list is added by the headend to the data packet, so that other devices in the network can execute an instruction inserted into the SID list.

Generally, the SR policy contains a plurality of candidate paths (Candidate Paths). Each candidate path represents a specific mode in which traffic is transmitted from the headend to the endpoint in the corresponding SR policy. Each candidate path has a preference (Preference) value. A path with a higher preference value is preferred. The headend selects an optimal candidate path as a transmission path of the data packet based on the preference value of each candidate path. In other words, a headend node can determine the transmission path from the plurality of candidate paths based on only the preference values of the candidate paths, and more processing manners cannot be provided. This affects service transmission quality.

### SUMMARY

Embodiments of this application provide a segment routing policy processing method and apparatus, to provide more processing behaviors for a network device, and improve diversity of the processing behaviors and service transmission performance.

According to a first aspect of this application, a segment routing processing method is provided. The method includes: A first network device obtains a segment routing SR policy, where the segment routing SR policy includes identification information, and the identification information indicates a type of at least one of the SR policy, a candidate path in the SR policy, and a segment list in the candidate path; and the first network device determines, based on the identification information, a processing behavior corresponding to at least one of the SR policy, the candidate path in the SR policy, and the segment list in the candidate path. In other words, the first network device obtains the SR policy. The SR policy includes the identification information, and the identification information indicates the type of at least one of the SR policy, the candidate path in the SR policy, and the segment list in the candidate path. The first network device determines, based on the identification information, a type related to the SR policy, and further determines a processing behavior that matches the type. In other words, the first network device may determine different processing behaviors based on the identification information in the SR policy, to implement service transmission by using the determined processing behavior, without performing service transmission by using a single processing behavior. This improves flexibility and diversity of service processing.

In an optional implementation, the type includes a multi-fed and selective receiving type, the multi-fed and selective receiving type indicates to determine at least two forwarding paths according to the SR policy, and the at least two forwarding paths are used to send a same service packet.

In an optional implementation, that the first network device determines, based on the identification information, a processing behavior corresponding to at least one of the SR policy, the candidate path in the SR policy, and the segment list in the candidate path includes: The first network device determines, based on the identification information, at least two forwarding paths from at least one of the SR policy, the candidate path in the SR policy, and the segment list in the candidate path; the first network device replicates a first service packet to obtain a second service packet; and the first network device sends the first service packet through a first forwarding path in the at least two forwarding paths, and sends the second service packet through a second forwarding path in the at least two forwarding paths. To be specific, when the identification information indicates the multi-fed and selective receiving type, the first network device may use a plurality of candidate paths with a same preference value as forwarding paths based on the identification information, to replicate a plurality of copies of same data, and separately transmit the same data through the plurality of forwarding paths, without selecting, based on another parameter, an optimal path from the plurality of candidate paths with the same preference value as a forwarding path. In this case, a processing manner of the SR policy is added, and service transmission quality is improved.

In an optional implementation, the first network device is an intermediate node on a forwarding path, and that the first network device sends the first service packet through a first forwarding path in the at least two forwarding path, and sends the second service packet through a second forwarding path in the at least two forwarding paths includes: The first network device separately encapsulates path information of the first forwarding path into the first service packet, and encapsulates path information of the second forwarding path into the second service packet; and the first network device sends the encapsulated first service packet through the first forwarding path, and sends the encapsulated second service packet through the second forwarding path. In other words, in this application, service packets are sent in multiple paths by using the path information corresponding to the two packets obtained through replication. This improves service transmission quality.

In an optional implementation, that the first network device encapsulates path information of the first forwarding path into the first service packet, and encapsulates path information of the second forwarding path into the second service packet includes: The first network device encapsulates a first packet header into an outer layer of the first service packet, where the first packet header includes the path information of the first forwarding path; and the first network device encapsulates a second packet header into an outer layer of the second service packet, where the second packet header includes the path information of the second forwarding path; or the first network device inserts the path information of the first forwarding path into a segment routing header (segment routing header, SRH) of the first service packet; and the first network device inserts the path information of the second forwarding path into an SRH of the second service packet. In other words, in this application, the path information of the determined forwarding path may be carried in various encapsulation manners, to implement multi-fed and selective receiving, and ensure service transmission quality.

In an optional implementation, when the identification information indicates that the type of the SR policy is the multi-fed and selective receiving type, the at least two forwarding paths are at least two candidate paths in the SR policy; when the identification information indicates that the type of the candidate path in the SR policy is the multi-fed and selective receiving type and each of at least two candidate paths in the SR policy corresponds to the identification information, the at least two forwarding paths are the at least two candidate paths in the SR policy; when the identification information indicates that the type of the candidate path in the SR policy is the multi-fed and selective receiving type and one candidate path in the SR policy corresponds to the identification information, the at least two forwarding paths are paths corresponding to at least two segment lists in the candidate path in the SR policy; or when the identification information indicates that the type of the segment list in the candidate path in the SR policy is the multi-fed and selective receiving type and each of at least two segment lists in the candidate path corresponds to the identification information, the at least two forwarding paths are paths corresponding to the at least two segment lists.

In an optional implementation, the type includes a composite type, and the composite type indicates that the SR policy includes nested sub-SR policies.

In an optional implementation, that the first network device determines, based on the identification information, a processing behavior corresponding to at least one of the SR policy, the candidate path, and the segment list includes: The first network device determines, based on the identification information, a forwarding path from a sub-SR policy corresponding to at least one of the SR policy, the candidate path in the SR policy, and the segment list in the candidate path; and the first network device sends a service packet based on the forwarding path.

In an optional implementation, when the identification information indicates the type of the candidate path in the SR policy, the identification information is carried in a field corresponding to a binding segment identifier (Binding SID, BSID) of the candidate path.

In an optional implementation, in a segment routing over internet protocol version 6 (segment routing over internet protocol version 6, SRv6) network, the identification information is carried in a behavior field corresponding to the BSID of the candidate path.

In an optional implementation, in a segment routing-multiprotocol label switching (segment routing-multiprotocol label switching, SR-MPLS) network, a BSID sub-type length value (type length value, TLV) includes a newly added BSID behavior field, and the identification information is carried in the behavior field; or the identification information is carried in a newly added BSID behavior sub-TLV.

In an optional implementation, the identification information is carried in a flag field or a reserved field in a BSID sub-TLV.

In an optional implementation, when the identification information indicates the type of the candidate path in the SR policy, the identification information is carried in a flag sub-TLV corresponding to the candidate path.

In an optional implementation, when the identification information indicates the type of the candidate path in the SR policy, the identification information is carried in a newly added indication field sub-TLV in the candidate path.

In an optional implementation, when the identification information indicates the type of the candidate path in the SR policy, the identification information is carried in association information of the SR policy.

In an optional implementation, the identification information is carried in a reserved field of a candidate path identifier sub-TLV corresponding to the association information.

In an optional implementation, the identification information is carried in a newly added association TLV of the association information.

According to a second aspect of this application, a segment routing policy sending method is provided. The method includes: A controller obtains an SR policy, where the SR policy includes identification information, and the identification information indicates a type of at least one of the SR policy, a candidate path in the SR policy, and a segment list in the candidate path; and the controller sends the SR policy to the first network device.

In an optional implementation, the type includes a multi-fed and selective receiving type, the multi-fed and selective receiving type indicates to determine at least two forwarding paths according to the SR policy, and the at least two forwarding paths are used to send a same service packet.

In an optional implementation, the type includes a composite type, and the composite type indicates that the SR policy includes nested sub-SR policies.

According to a third aspect of this application, a segment routing policy processing apparatus is provided. The apparatus includes: an obtaining unit, configured to obtain a segment routing SR policy, where the segment routing SR policy includes identification information, and the identification information indicates a type of at least one of the SR policy, a candidate path in the SR policy, and a segment list in the candidate path; and a determining unit, configured to determine, by a first network device based on the identification information, a processing behavior corresponding to at least one of the SR policy, the candidate path in the SR policy, and the segment list in the candidate path.

In an optional implementation, the type includes a multi-fed and selective receiving type, the multi-fed and selective receiving type indicates to determine at least two forwarding paths according to the SR policy, and the at least two forwarding paths are used to send a same service packet.

In an optional implementation, the determining unit includes a determining subunit, a replicating subunit, and a sending subunit. The determining subunit is configured to determine, based on the identification information, the at least two forwarding path from at least one of the SR policy, the candidate path in the SR policy, and the segment list in the candidate path; the replicating subunit is configured to replicate a first service packet to obtain a second service packet; and the sending subunit is configured to send the first service packet through a first forwarding path in the at least two forwarding paths, and send the second service packet throug a second forwarding path in the at least two forwarding paths.

In an optional implementation, a device on which the apparatus is located is an intermediate node on a forwarding path, and the sending subunit is specifically configured to: separately encapsulate path information of the first forwarding path into the first service packet, and encapsulate path information of the second forwarding path into the second service packet; and send the encapsulated first service packet through the first forwarding path, and send the encapsulated second service packet through the second forwarding path.

In an optional implementation, the sending subunit is specifically configured to: encapsulate a first packet header into an outer layer of the first service packet, where the first packet header includes the path information of the first forwarding path; and encapsulate a second packet header into an outer layer of the second service packet, where the second packet header includes the path information of the second forwarding path; or insert the path information of the first forwarding path into a segment routing header SRH of the first service packet; and insert the path information of the second forwarding path into an SRH of the second service packet.

In an optional implementation, when the identification information indicates that the type of the SR policy is the multi-fed and selective receiving type, the at least two forwarding paths are at least two candidate paths in the SR policy;

when the identification information indicates that the type of the candidate path in the SR policy is the multi-fed and selective receiving type and each of at least two candidate paths in the SR policy corresponds to the identification information, the at least two forwarding paths are the at least two candidate paths in the SR policy;
when the identification information indicates that the type of the candidate path in the SR policy is the multi-fed and selective receiving type and one candidate path in the SR policy corresponds to the identification information, the at least two forwarding paths are paths corresponding to at least two segment lists in the candidate path in the SR policy; or
when the identification information indicates that the type of the segment list in the candidate path in the SR policy is the multi-fed and selective receiving type and each of at least two segment lists in the candidate path corresponds to the identification information, the at least two forwarding paths are paths corresponding to the at least two segment lists.

In an optional implementation, the type includes a composite type, and the composite type indicates that the SR policy includes nested sub-SR policies.

In an optional implementation, the determining unit is specifically configured to: determine, based on the identification information, a forwarding path from a sub-SR policy corresponding to at least one of the SR policy, the candidate path in the SR policy, and the segment list in the candidate path; and send a service packet based on the forwarding path.

In an optional implementation, when the identification information indicates the type of the candidate path in the SR policy, the identification information is carried in a field corresponding to a binding segment identifier BSID of the candidate path.

In an optional implementation, in a segment routing over internet protocol version 6 SRv6 network, the identification information is carried in a behavior field corresponding to the BSID of the candidate path.

In an optional implementation, in a segment routing-multiprotocol label switching SR-MPLS network, a BSID sub-type length value TLV includes a newly added BSID behavior field, and the identification information is carried in the behavior field; or the identification information is carried in a newly added BSID behavior sub-TLV.

In an optional implementation, the identification information is carried in a flag field or a reserved field in a BSID sub-TLV.

In an optional implementation, when the identification information indicates the type of the candidate path in the SR policy, the identification information is carried in a flag sub-TLV corresponding to the candidate path.

In an optional implementation, when the identification information indicates the type of the candidate path in the SR policy, the identification information is carried in a newly added indication field sub-TLV in the candidate path.

In an optional implementation, when the identification information indicates the type of the candidate path in the SR policy, the identification information is carried in association information of the SR policy.

In an optional implementation, the identification information is carried in a reserved field of a candidate path identifier sub-TLV corresponding to the association information.

In an optional implementation, the identification information is carried in a newly added association TLV of the association information.

According to a fourth aspect of this application, an apparatus for sending a segment routing policy is provided. The apparatus includes an obtaining unit and a sending unit. The obtaining unit is configured to obtain an SR policy, the SR policy includes identification information, and the identification information indicates a type of at least one of the SR policy, a candidate path in the SR policy, and a segment list in the candidate path. The sending unit is configured to send the SR policy to a first network device.

In an optional implementation, the type includes a multi-fed and selective receiving type, the multi-fed and selective receiving type indicates to determine at least two forwarding paths according to the SR policy, and the at least two forwarding paths are used to send a same service packet.

In an optional implementation, the type includes a composite type, and the composite type indicates that the SR policy includes nested sub-SR policies.

According to a fifth aspect of this application, a network system for segment routing policy processing is provided. The network system includes a controller and a first network device. The first network device is configured to perform the method in any one of the first aspect or the possible implementations of the first aspect. The controller is configured to perform the method in any one of the second aspect or the possible implementations of the second aspect.

According to a sixth aspect of this application, a network device is provided. The device includes a processor and a memory. The memory is configured to store instructions or a computer program. The processor is configured to execute the instructions or the computer program in the memory, to enable the network device to perform the method according to any one of the first aspect or the possible implementations of the first aspect.

According to a seventh aspect of this application, a computer-readable storage medium is provided, including instructions. When the instructions are runs on a processor, the method according to any one of the first aspect or the possible implementations of the first aspect is implemented.

According to an eighth aspect of this application, a chip is provided, including an interface circuit and a processor. The interface circuit is
connected to the processor, and the processor is configured to enable the chip to perform the method in any one of the first aspect or the possible implementations of the first aspect, or perform the method in any one of the second aspect or the possible implementations of the second aspect.

According to the technical solution provided in this application, a first network device obtains an SR policy. The SR policy includes identification information, and the identification information indicates a type of at least one of the SR policy, a candidate path in the SR policy, and a segment list in the candidate path. The first network device determines, based on the identification information, a type related to the SR policy, and further determines a processing behavior that matches the type. In other words, the first network device may determine different processing behaviors based on the identification information in the SR policy, to implement service transmission by using the determined processing behavior, without performing service transmission by using a single processing behavior. This improves flexibility and diversity of service processing.

### BRIEF DESCRIPTION OF DRAWINGS

To describe the technical solutions in embodiments of this application or the conventional technology more clearly, the following briefly describes the accompanying drawings for describing embodiments or the conventional technology. It is clear that, the accompanying drawings in the following descriptions show only some embodiments recorded in this application, and a person of ordinary skill in the art may still derive other drawings from these accompanying drawings without creative efforts.
FIG. 1a is a diagram of an application scenario according to an embodiment of this application;
FIG. 1b is a diagram of another application scenario according to an embodiment of this application;
FIG. 2 is a flowchart of a segment routing policy processing method according to an embodiment of this application;
FIG. 3 is a schematic diagram of an SR policy according to an embodiment of this application;
FIG. 4a is a schematic diagram of a scenario corresponding to a path-level identifier according to an embodiment of this application;
FIG. 4b is a schematic diagram of a scenario corresponding to another path-level identifier according to an embodiment of this application;
FIG. 4c is a schematic diagram of a scenario corresponding to a segment list-level identifier according to an embodiment of this application;
FIG. 5a is a schematic diagram of an application scenario of packet sending according to an embodiment of this application;
FIG. 5b is a schematic diagram of another application scenario of packet sending according to an embodiment of this application;
FIG. 6a is a schematic diagram of a structure of a BSID attribute TLV according to an embodiment of this application;
FIG. 6b is a schematic diagram of a structure of a newly added behavior field in a BSID attribute TLV according to an embodiment of this application;
FIG. 6c is a schematic diagram of a structure of a newly added BSID attribute sub-TLV according to an embodiment of this application;
FIG. 7 is a schematic diagram of a structure of an extension flag field according to an embodiment of this application;
FIG. 8a is a schematic diagram in which identification information is carried by using a type field of a candidate path according to an embodiment of this application;
FIG. 8b is a schematic diagram in which a type field is carried according to an embodiment of this application;
FIG. 9a is a schematic diagram of a structure of a candidate path identifier sub-TLV according to an embodiment of this application;
FIG. 9b is a schematic diagram of a structure of a newly added association TLV according to an embodiment of this application;
FIG. 10 is a flowchart of an SR policy sending method according to an embodiment of this application;
FIG. 11 is a diagram of a structure of a segment routing policy processing apparatus according to an embodiment of this application;
FIG. 12 is a diagram of a structure of an SR policy sending apparatus according to an embodiment of this application;
FIG. 13 is a diagram of a structure of a network device according to an embodiment of this application; and
FIG. 14 is a diagram of a structure of another network device according to an embodiment of this application.

### DESCRIPTION OF EMBODIMENTS

To make a person skilled in the art understand the technical solutions in this application better, the following clearly and completely describes the technical solutions in embodiments of this application with reference to the accompanying drawings in embodiments of this application. It is clear that the described embodiments are merely some rather than all of embodiments of this application.

Currently, when a forwarding path is determined according to an SR policy, an optimal candidate path is first selected from a plurality of candidate paths as the forwarding path based on a preference value corresponding to each candidate path in the SR policy. If the plurality of candidate paths have a same preference value, an optimal path is selected as the forwarding path based on other parameters. When an ingress node needs to transmit a service flow, the ingress node transmits the service flow through the forwarding path. When a node or a link in the forwarding path is faulty, the ingress node needs to re-determine a forwarding path, and then use the new forwarding path to forward a subsequent service. Because it takes time for the ingress node to re-determine the forwarding path, service forwarding efficiency is affected.

In view of this, an SR redundancy protection policy (Redundancy Policy), which is referred to as an R policy for short, is proposed for the SR policy to implement redundancy protection of segment routes. The redundancy protection policy is used to enable data packet replication between a replication node and a merging node, to guide a same data flow to replicate a plurality of copies of same data, and separately transmit the same data through different forwarding paths in an SR domain. In other words, a new type, namely, a multi-fed and selective receiving type, is defined for the SR policy. Specifically, when the forwarding path is determined by using the SR redundancy protection policy, a plurality of candidate paths with a same preference value may be used as forwarding paths, to replicate a plurality of copies of same data, and separately transmit the same data through the plurality of forwarding paths, without selecting, based on another parameter, an optimal path from the plurality of candidate paths with the same preference value as the forwarding path. In this case, a processing manner of the SR policy is added.

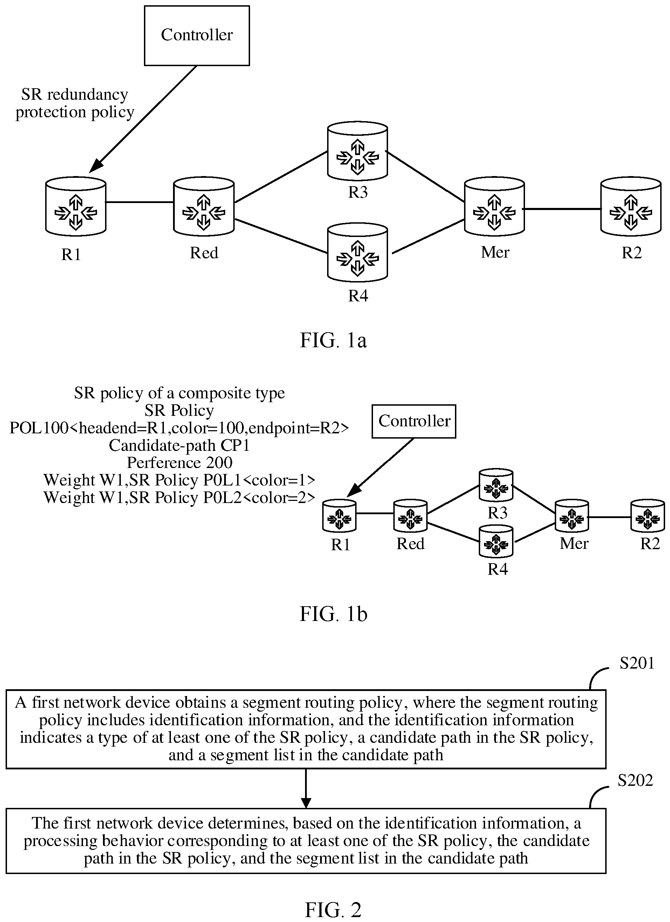

For ease of understanding of a specific implementation of the SR redundancy protection policy, refer to an application scenario diagram shown in FIG. 1a. In this application scenario, a node R1 is an ingress node, a node R2 is an egress node, and a node R3, a node R4, a node Red, and a node Mer are intermediate nodes. A controller delivers an SR redundancy protection policy to the node R1 and specifies, in the policy, the node Red as a replication node. When receiving a data packet, R1 determines a forwarding path according to the redundancy protection policy. For example, the forwarding path is R1-Red-R3-Mer-R2. R1 encapsulates a segment list corresponding to the forwarding path and the replication node Red into the data packet. After receiving the data packet, Red determines, based on the egress node R2 in the segment list, that there are two forwarding paths to the egress node: Red-R3-Mer-R2 and Red-R4-Mer-R2, and replicates the data packet to obtain two data packets. The node Red encapsulates a segment list of one forwarding path in each of the two data packets and forwards the data packets. After the two data packets are forwarded to the merging node Mer, Mer performs selective receiving based on metadata in the data packets, to transmit the first received data packet in a same data flow to the egress node R2, and eliminate a redundant data packet. The metadata includes a flow identifier, a sequence number, and the like of a service flow corresponding to the data packet, the flow identifier identifies a specific service flow, and the sequence number identifies different packet sequences in the service flow. The foregoing nodes may be network devices such as routers or switches, may be some components on a network device such as a board or a line card on the network device, or may be a functional module on the network device.

It can be learned from the scenario shown in FIG. 1a that, when a path is faulty or a packet loss occurs, the node Red may use the other forwarding path to continue service forwarding, so that a service is not interrupted.

In addition, a new type, namely, a composite type, is redefined for the SR policy, to indicate that the SR policy may include nested sub-SR policies. When determining the forwarding path according to the SR policy, a headend may determine the forwarding path according to the sub-SR policy included in the SR policy, and add a processing behavior corresponding to the SR policy. As shown in FIG. 1b, an SR policy sent by the controller to a node R1 is an SR policy of a composite type. The SR policy includes two nested SR policies POL1 and POL2, and colors corresponding to the two SR policies are respectively 1 and 2. In addition, headends and endpoints overlap with those in POL100, and the headends are R1 and the endpoints are R2. In this application scenario, POL1 and the POL2 are referenced to POL100 based on the corresponding color values, and candidate paths corresponding to POL1 and POL2 are used as forwarding paths. For traffic steered to POL100, a proportion of traffic distributed to POL1 is W1/(W1+W2), and a proportion of traffic distributed to POL2 is W2/(W1+W2). To be specific, based on a parent SR policy (POL100), a service flow can be iteration to sub-SR policies (POL1 and POL2). In this way, the existing SR policies (POL1 and POL2) can be reused, and load balancing is performed on the plurality of paths.

However, currently, when the controller delivers the SR policy, policies delivered in the foregoing two scenarios are the same. As a result, the network device cannot obtain a plurality of processing behaviors according to the SR policy, and service transmission is affected.

In view of this, embodiments of this application provides a packet transmission method. Identification information is added to a delivered SR policy, and a related type of the SR policy is indicated by using the identification information, so that a network device can determine, based on the identification information, a processing behavior that matches the type. This improves flexibility of processing a service packet by the network device.

For ease of understanding of the technical solutions provided in embodiments of this application, the following provides descriptions with reference to two application scenarios in FIG. 1a and FIG. 1b.

FIG. 2 is a flowchart of a segment routing policy processing method according to an embodiment of this application. As shown in FIG. 2, the method may include the following steps.

S201. A first network device obtains a segment routing policy, where the segment routing policy includes identification information.

In this embodiment, the SR policy may carry the identification information. The identification information indicates a type of at least one of the SR policy, a candidate path in the SR policy, and a segment list (segment list) of the candidate path. The first network device may be the node R1 or the node Red in FIG. 1a.

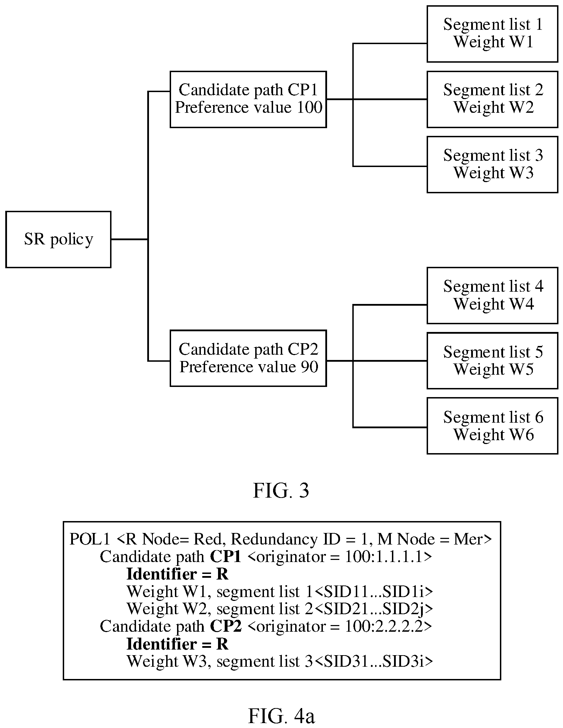

In this embodiment, the SR policy obtained by the first network device may be delivered by a controller or preconfigured. The SR policy includes information, for example, the identification information, a triplet identifier (headend, color, and endpoint), and a candidate path. For example, in an SR policy shown in FIG. 3, the SR policy has two candidate paths (Candidate Paths): CP1 and CP2. A preference value of CP1 is 100, and a preference value of CP2 is 90. CP1 includes three segment lists: a segment list 1 to a segment list 3. Weights of the three segment lists are respectively W1, W2, and W3, indicating that a proportion of traffic passing through the three segment lists is W1:W2:W3. CP2 includes three segment lists: a segment list 4 to a segment list 6. Weights of the three segment lists are respectively W4, W5, and W6, indicating that a proportion of traffic passing through the three segment lists is W4:W5:W6. Each segment list includes a plurality of segment identifiers SIDs, and paths corresponding to the plurality of segment identifiers are paths from headends to endpoints.

The identification information may be identifiers of different levels. When the identification information is a policy-level identifier, the identification information indicates the type of the SR policy. When the identification information is a path-level identifier, the identification information indicates the type of the candidate path in the SR policy. When the identification information is a segment list-level identifier, the identification information indicates the type of the segment list in the candidate path. The SR policy may include at least one of the policy-level identifier, the path-level identifier, or the segment list-level identifier.

The type may include a multi-fed and selective receiving type and a composite type. The multi-fed and selective receiving type indicates that the first network device may determine at least two forwarding paths according to the SR policy, and the at least two forwarding paths are used to send a same service packet. The composite type indicates that the SR policy includes nested sub-SR policies. The following separately describes the multi-fed and selective receiving type and the composite type.

### (1) SR policy of the multi-fed and selective receiving type

When the identification information is the policy-level identifier, the at least two forwarding paths are at least two candidate paths in the SR policy. For example, if the SR policy carries identification information R, and a maximum preference value corresponds to a candidate path CP1 and a candidate path CP3, both the candidate path CP1 and the candidate path CP3 are used as forwarding paths to replicate a plurality of copies of same data, and separately transmit the same data.

When the identification information is the path-level identifier and each of at least two candidate paths in the SR policy corresponds to the identification information, the at least two forwarding paths are the at least two candidate paths. For example, as shown in FIG. 4a, in an SR policy POL1, both a candidate path CP1 and a candidate path CP2 correspond to identification information R. In this case, both CP1 and CP2 may be selected as forwarding paths. A plurality of segment lists in the candidate paths as the forwarding paths are used to implement load balancing. As shown in FIG. 4a, a segment list 1 and a segment list 2 are used to perform load balancing based on corresponding weights. In the SR policy shown in FIG. 4a, a replication node R is the node Red in the application scenario shown in FIG. 1a, and a selective receiving node M is the node Mer in the application scenario shown in FIG. 1a.

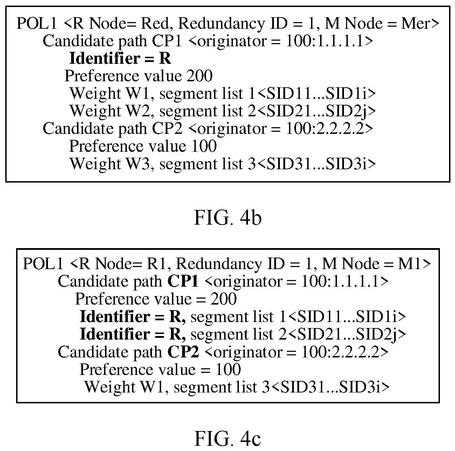

When the identification information is the path-level identifier, a specific candidate path in the SR policy is of the multi-fed and selective receiving type, and only one candidate path in the SR policy corresponds to the identification information, the at least two forwarding paths are paths corresponding to at least two segment lists in the candidate path. For example, as shown in FIG. 4b, a candidate path CP1 in the SR policy corresponds to identification information R. In this case, a plurality of segment lists corresponding to CP1 are used as multi-fed and selective receiving paths, in other words, SID-List1 and SID-List2 each are used as a forwarding path, and load balancing is not performed. Further, to remain a routing policy between different candidate paths unchanged, an optimal candidate path is still determined based on a preference (preference) value. For example, in FIG. 4b, because a preference value 200 of CP1 is greater than a preference value of CP2, CP1 is selected as the optimal candidate path. In addition, because CP1 corresponds to the identification information R, a plurality of segment lists in CP1 are used as multi-fed paths.

When the identification information is the segment list-level identifier and each of at least two segment lists in the candidate path corresponds to the identification information, the at least two forwarding paths are paths corresponding to the at least two segment lists. For example, as shown in FIG. 4c, the SR policy includes the candidate path CP1 and the candidate path CP2, and CP1 is selected as the preferred candidate path based on the preference (preference) value. When the segment list (segment list) is selected, because both the segment list 1 and the segment list 2 correspond to the identification information R, both the two segment lists are selected as the forwarding paths.

When one SR policy carries identification information of a plurality of levels, operations may be separately performed based on the identifiers of the levels, and the operations do not affect each other.

### (2) SR policy of the composite type

When the identification information is the policy-level identifier, it indicates that the SR policy includes the nested sub-SR policies. When the identification information is the path-level identifier, it indicates that a candidate path in the SR policy includes the nested sub-SR policies. When the identification information is the segment list-level identifier, it indicates that a segment list in the candidate path includes the nested sub SR policies, as shown in FIG. 1b.

A manner of including the identification information in the SR policy is described in a subsequent embodiment.

S202. The first network device determines, based on the identification information, a processing behavior corresponding to at least one of the SR policy, the candidate path in the SR policy, and the segment list in the candidate path.

In this embodiment, after obtaining the identification information by parsing the SR policy, the first network device may determine a matching processing behavior based on the identification information. The processing behavior includes a forwarding path selection rule and a service packet sending rule. For example, when the type indicated by the identification information is the multi-fed and selective receiving type, a corresponding selection rule is determining at least two forwarding paths according to the SR policy, and a corresponding sending rule is sending a same service packet through the at least two determined forwarding paths. When the type indicated by the identification information is the composite type, a corresponding selection rule is determining a forwarding path according to the nested sub-SR policy corresponding to the SR policy, and a corresponding sending rule is sending a service packet through the determined forwarding path, so that load balancing is implemented on the determined forwarding path.

In view of this, when the type indicated by the identification information is the multi-fed and selective receiving type, that the first network device determines, based on the identification information, a processing behavior corresponding to at least one of the SR policy, the candidate path in the SR policy, and the segment list in the candidate path includes: The first network device determines, based on the identification information, at least two forwarding paths from at least one of the SR policy, the candidate path in the SR policy, and the segment list in the candidate path; the first network device replicates a first service packet to obtain a second service packet; and the first network device sends the first service packet through a first forwarding path in the at least two forwarding paths, and sends the second service packet through a second forwarding path in the at least two forwarding paths. Because the identification information may be identifiers of different levels, specific forms of the at least two forwarding paths determined based on the identification information are also different. For the specific forms, refer to the foregoing related descriptions.

In this embodiment, because the at least two determined forwarding paths are multi-fed paths, after obtaining the first service packet, the first network device replicates the first service packet to obtain the second service packet. Data payloads (payloads) corresponding to the first service packet and the second service packet are the same. Then, the first service packet is sent through the first forwarding path in the at least two forwarding paths, and the second service packet is sent through the second forwarding path in the at least two forwarding paths. In other words, the first network device sends a same service packet through two forwarding paths.

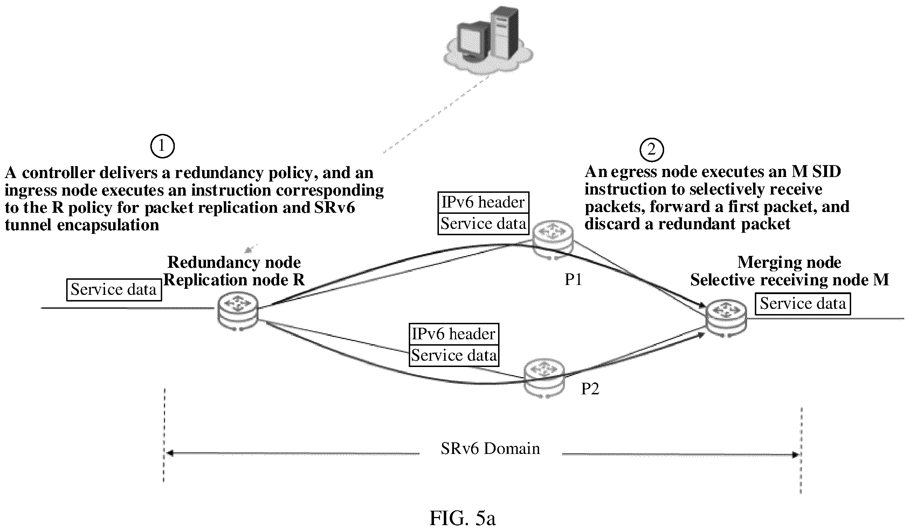

When the first network device is a headend in the SR policy, after determining the first forwarding path and the second forwarding path, the first network device replicates a received data packet, encapsulates path information corresponding to the first forwarding path into the first service packet, and encapsulates path information corresponding to the second forwarding path into the second service packet. In an end-to-end multi-fed and selective receiving service scenario shown in FIG. 5a, a headend R receives an R policy delivered by a controller, and replicates a service packet. The packet arrives at an endpoint M through a node P1 or a node P2. M selectively receives packets, forwards a first packet, and discards a redundant packet. It should be noted that, a service packet sent by the node P1 and the service packet sent by the node P2 carry same data (service data), but path information carried in IPv6 headers is different.

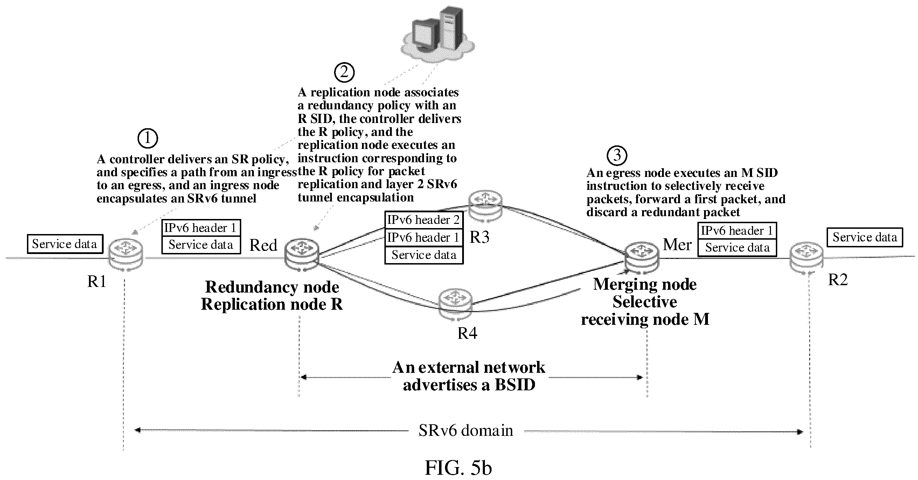

When the first network device is an intermediate node in the routing policy, a service packet obtained by the first network device is sent by a headend in the routing policy, and information that is about a path to an endpoint and that is determined by the headend is encapsulated into the service packet. After determining the at least two forwarding paths by using the identification information, the first network device re-encapsulates the path information of the at least two determined forwarding paths into the received service packet. Specifically, the path information of the first forwarding path is encapsulated into the first service packet, and the path information of the second forwarding path is encapsulated into the second service packet. The encapsulated first service packet is sent through the first forwarding path, and the encapsulated second service packet is sent through the second forwarding path. For example, in an application scenario shown in FIG. 5b, the first network device is a node R in the figure, and a headend is an ingress node. A controller delivers an SR policy to the headend, and formulates a path from the ingress node to an egress node (endpoint). The headend encapsulates an IPv6 header 1 to carry specified path information. The controller delivers an R policy to the node R, indicating the node R to replicate a packet and encapsulate path information. A node M selectively receives packets, forwards a first packet to the egress node, and discards a redundant packet.

The first network device may encapsulate the path information in the following manners. In one manner, the first network device encapsulates a first packet header into an outer layer of the first service packet, where the first packet header includes the path information of the first forwarding path, and the first network device encapsulates a second packet header into an outer layer of the second service packet, where the second packet header includes the path information of the second forwarding path. That is, the first network device may encapsulate a new packet header into the outer layer of the service packet to carry the path information. For example, as shown in FIG. 4b, the first network device is the node R in the figure, and the first network device encapsulates a new IPv6 header 2 into the outer layer of the service packet to carry the path information of the forwarding path.

In another manner, the first network device inserts, into a segment routing header (Segment Routing Header, SRH) of the first service packet, a segment list corresponding to the first forwarding path, and inserts, into an SRH of the second service packet, a segment list corresponding to the second forwarding path. That is, the first network device may insert, into the SRH of the service packet, the segment list corresponding to the determined forwarding path.

When the type indicated by the identification information is the composite type, that the first network device determines, based on the identification information, a processing behavior corresponding to at least one of the SR policy, the candidate path in the SR policy, and the segment list in the candidate path includes: The first network device determines, based on the identification information, a forwarding path from a sub-SR policy corresponding to at least one of the SR policy, the candidate path in the SR policy, and the segment list in the candidate path; and the first network device sends a service packet based on the forwarding path. That is, the first network device still selects the forwarding path based on a preference value of the candidate path, but determines the forwarding path from the sub-policy.

It can be learned that the first network device obtains the SR policy. The SR policy includes the identification information, and the identification information indicates the type of at least one of the SR policy, the candidate path in the SR policy, and the segment list in the candidate path. The first network device determines, based on the identification information, a type related to the SR policy, and further determines a processing behavior that matches the type. In other words, the first network device may determine different processing behaviors based on the identification information in the SR policy, to implement service transmission by using the determined processing behavior, without performing service transmission by using a single processing behavior. This improves flexibility of service processing.

It can be learned from the foregoing descriptions that the identification information may be the policy-level identifier, the path-level identifier, or the segment list-level identifier. For different levels of identifiers, manners of including the identification information in the SR policy are different.

In an implementation, when the identification information is the policy-level identifier, modeling may be performed based on yet another next generation (yet another next generation, YANG) model of the SR policy, to add the identification information to a YANG model. The YANG model is implemented based on an extensible markup language (extensible markup language, XML) and is a file in an XML format. The file may include a triplet identifier and the identification information that are of the SR policy.

In an implementation, when the identification information is the path-level identifier, the identification information may be carried in the routing policy in the following manners.
1. Routing policy delivered based on a border gateway protocol (Border Gateway Protocol, BGP):
   (1) The identification information is carried by using a field corresponding to a BSID corresponding to the candidate path in the SR policy. Generally, each candidate path in the SR policy has a BSID attribute. Therefore, the identification information may be carried by using the field corresponding to the BSID. Specifically, when delivering the SR policy, the controller forcibly binds the SR policy to a special BSID and a behavior instruction corresponding to the BSID, to indicate that the candidate path may be used as a multi-fed path.

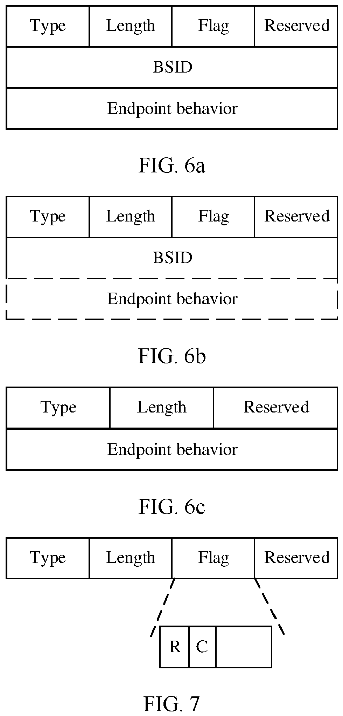

When the controller delivers the SR policy based on BGP, the identification information may be forcibly carried in a BSID attribute sub-type length value (type length value, TLV) of the SR policy delivered by the BGP. For example, in a segment routing over internet protocol version 6 network, the BSID attribute corresponds to an endpoint behavior (endpoint behavior) field, and the identification information is carried in the field. FIG. 6a is a diagram of a structure of a BSID attribute. The BSID attribute is presented in a form of a TLV, including a type (Type) field, a length (length) field, a flag (Flag) field, a reserved (Reserved) field, a BSID field, and an endpoint behavior field. The identification information is carried in the endpoint behavior field.

When the SR policy is run in a segment routing-multiprotocol label switching network, the BSID attribute does not have a corresponding endpoint behavior field in the SR-MPLS network. Therefore, a new behavior field is added to the original BSID attribute to carry the identification information by using the newly added behavior field of giant. As shown in FIG. 6b, a BSID behavior field (where a dashed line indicates that the field is newly added) is added to the original BSID attribute, and the field carries the identification information in a forcible delivery manner. Alternatively, a new sub-TLV is added to the BSID attribute, that is, a new BSID behavior sub-TLV is added, to carry the identification information by using the BSID behavior sub-TLV. FIG. 6c is a diagram of a structure of a newly added BSID behavior sub-TLV, including a type field, a length field, a BSID behavior field, and the like.

Optionally, the identification information may alternatively be carried in a reserved field of the BSID sub-TLV or a bit of a flag field. A flag (Flag) field and a reserved field shown in FIG. 5a or FIG. 5b are used as an example. One bit of the flag field may be used to carry the identification information.

(2) A flag is added to the candidate path to carry the identification information, to indicate that the candidate path may be used as a multi-fed path. For example, as shown in FIG. 4a, a flag Flag is added to each of the candidate path CP1 and the candidate path CP2 to carry the identification information R.

Specifically, a flag (Flag) sub-TLV may be added to a flag field corresponding to the candidate path, and the identification information is carried by using the newly added flag sub-TLV. That is, the flag sub-TLV is extended to carry the identification information, and this extension manner is applicable to both SRv6 and SR MPLS scenarios. As shown in FIG. 7, the flag sub-TLV is extended to carry the identification information.

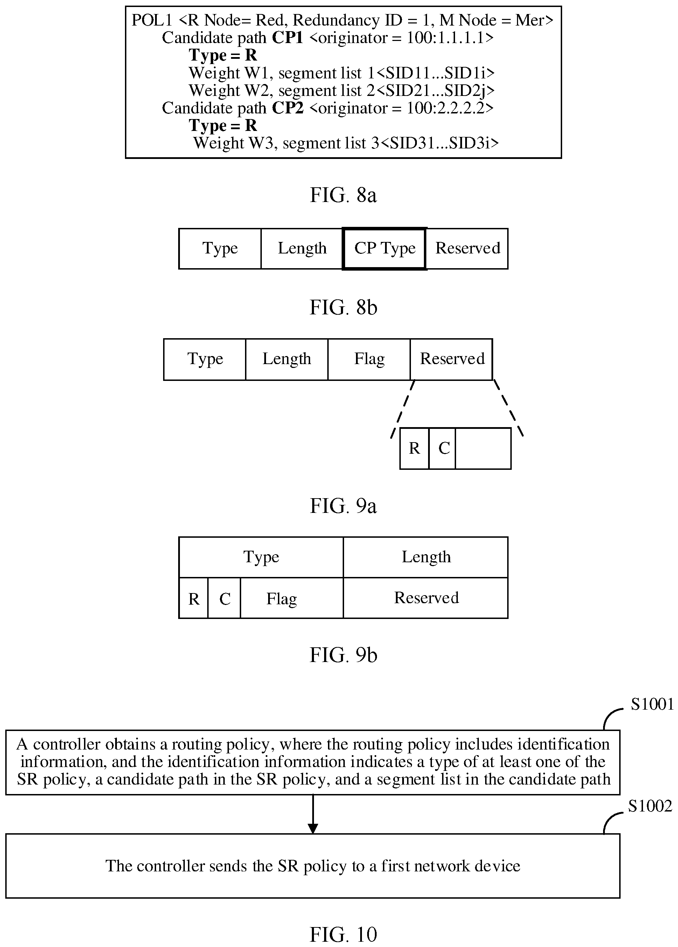

(3) A type (type) or an attribute (attribute) is added to the candidate path to carry the identification information, to indicate that the candidate path may be used as a multi-fed path. As shown in FIG. 8a, for a candidate path CP1 and a candidate path CP2, identification information (Redundancy) is carried by using a newly added type to indicate, by using Redundancy, that the candidate paths CP1 and CP2 may be used as multi-fed paths.

Specifically, an indication field sub-TLV may be added to the candidate path, and the identification information is carried by using the newly added indication field sub-TLV (a candidate path type sub-TLV or a candidate path attribute sub-TLV). The newly added indication field sub-TLV may include a type or an attribute bit. For example, FIG. 8b is a diagram of a structure of a candidate path type sub-TLV, including a type field, a length field, a CP type field, a reserved field, and the like. The CP type carries the identification information.

### 2. SR policy delivered based on a path computation element communication protocol (Path Computation Element Communication Protocol, PCEP):

When the controller delivers the SR policy based on PCEP, the identification information may be carried in association (Association) information corresponding to the SR policy.
(1) The identification information is carried in a reserved field of a candidate path identifier (identifier) sub-TLV corresponding to the association information. FIG. 9a is a schematic diagram of a structure of a candidate path identifier sub-TLV. A flag is added to a reserved field to carry the identification information, to indicate that a candidate path may be used as a multi-fed path.
(2) A new association TLV is added to the association information corresponding to the SR policy, to carry the identification information by using the association TLV. The newly added associated (association) TLV shown in FIG. 9b is referred to as a candidate path type TLV, and a new flag (R or C) is defined in the TLV to carry the identification information.

In an implementation, when the identification information is the segment list-level identifier, an attribute flag may be added to segment list information, and the identification information is carried by using the attribute flag. When processing the segment list information, the first network device determines a corresponding processing behavior based on the identification information carried in the newly added attribute flag. The attribute flag may be a newly added TLV.

In an implementation, when the identification information is the segment list-level identifier, a type (type) flag may be added to segment list information, and the identification information is carried by using the type flag. When processing the segment list information, the first network device determines a corresponding processing behavior based on the identification information carried in the newly added type flag. The type flag may be a newly added TLV.

It can be learned that the identification information in the SR policy may be carried in a plurality of manners. During actual application, the foregoing plurality of carrying manners may be used for identification information of different levels.

FIG. 10 is a flowchart of a segment routing policy sending method according to an embodiment of this application. As shown in FIG. 10, the method may include the following steps.

S1001. A controller obtains an SR policy.

In this embodiment, the controller may obtain topology information of a network in which a first network device is located, and determine the SR policy based on the topology information and a related path algorithm. The SR policy includes identification information, and the identification information indicates a type of at least one of the SR policy, a candidate path in the SR policy, and a segment list in the candidate path. For a manner of including the identification information in the SR policy, refer to related descriptions in the foregoing method embodiments.

The type may include a multi-fed and selective receiving type and a composite type. The multi-fed and selective receiving type indicates to determine at least two forwarding paths according to the SR policy, and the at least two forwarding paths are used to send a same service packet. The composite type indicates that the SR policy includes nested sub-SR policies.

S1002. The controller sends the SR policy to the first network device.

In this embodiment, after obtaining the SR policy, the controller sends the SR policy to the first network device, so that the first network device determines, based on the identification information in the SR policy, a processing behavior corresponding to at least one of the SR policy, the candidate path in the SR policy, and the segment list in the candidate path.

When sending the SR policy to the first network device, the controller may deliver the SR policy based on BGP, or may deliver the SR policy based on PCEP.

Based on the foregoing method embodiments, embodiments of this application provide segment routing policy processing apparatuses. The following provides descriptions with reference to the accompanying drawings.

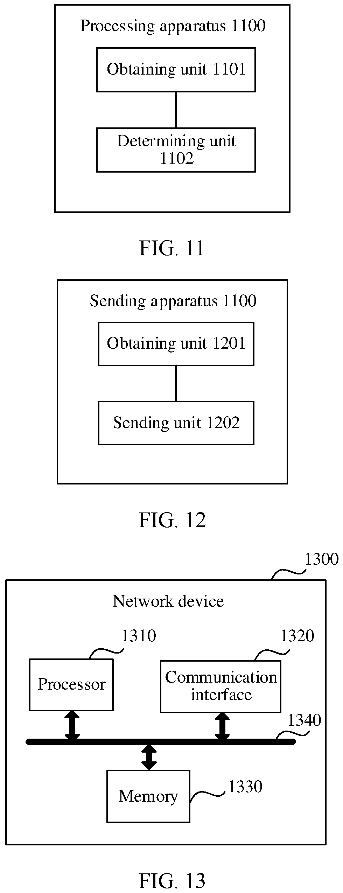

FIG. 11 shows a segment routing policy processing apparatus according to an embodiment of this application. The apparatus 1000 may implement a function of the foregoing first network device, and may include an obtaining unit 1101 and a determining unit 1102.

The obtaining unit 1101 is configured to obtain a segment routing SR policy. The segment routing SR policy includes identification information, and the identification information indicates a type of at least one of the SR policy, a candidate path in the SR policy, and a segment list in the candidate path. For a specific implementation of the obtaining unit 1101, refer to related descriptions of S201.

The determining unit 1102 is configured to determine, by a first network device based on the identification information, a processing behavior corresponding to at least one of the SR policy, the candidate path in the SR policy, and the segment list in the candidate path. For a specific implementation of the determining unit 1102, refer to related descriptions of S202.

In an optional implementation, the type includes a multi-fed and selective receiving type, the multi-fed and selective receiving type indicates to determine at least two forwarding paths according to the SR policy, and the at least two forwarding paths are used to send a same service packet.

In an optional implementation, the determining unit includes a determining subunit, a replicating subunit, and a sending subunit.

The determining subunit is configured to determine, based on the identification information, the at least two forwarding paths from at least one of the SR policy, the candidate path in the SR policy, and the segment list in the candidate path.

The replicating subunit is configured to replicate a first service packet to obtain a second service packet.

The sending subunit is configured to send the first service packet through a first forwarding path in the at least two forwarding paths, and send the second service packet through a second forwarding path in the at least two forwarding paths.

In an optional implementation, a device on which the apparatus is located is an intermediate node on a forwarding path, and the sending subunit is specifically configured to: separately encapsulate path information of the first forwarding path into the first service packet, and encapsulate path information of the second forwarding path into the second service packet; and send the encapsulated first service packet through the first forwarding path, and send the encapsulated second service packet through the second forwarding path.

In an optional implementation, the sending subunit is specifically configured to: encapsulate a first packet header into an outer layer of the first service packet, where the first packet header includes the path information of the first forwarding path; and encapsulate a second packet header into an outer layer of the second service packet, where the second packet header includes the path information of the second forwarding path; or insert the path information of the first forwarding path into a segment routing header SRH of the first service packet; and insert the path information of the second forwarding path into an SRH of the second service packet.

In an optional implementation, when the identification information indicates that the type of the SR policy is the multi-fed and selective receiving type, the at least two forwarding paths are at least two candidate paths in the SR policy.

When the identification information indicates that the type of the candidate path in the SR policy is the multi-fed and selective receiving type and each of at least two candidate paths in the SR policy corresponds to the identification information, the at least two forwarding paths are the at least two candidate paths in the SR policy.

When the identification information indicates that the type of the candidate path in the SR policy is the multi-fed and selective receiving type and one candidate path in the SR policy corresponds to the identification information, the at least two forwarding paths are paths corresponding to at least two segment lists in the candidate path in the SR policy.

When the identification information indicates that the type of the segment list in the candidate path in the SR policy is the multi-fed and selective receiving type and each of at least two segment lists in the candidate path corresponds to the identification information, the at least two forwarding paths are paths corresponding to the at least two segment lists.

In an optional implementation, the type includes a composite type, and the composite type indicates that the SR policy includes nested sub-SR policies.

In an optional implementation, the determining unit is specifically configured to: determine, based on the identification information, a forwarding path from a sub-SR policy corresponding to at least one of the SR policy, the candidate path in the SR policy, and the segment list in the candidate path; and send a service packet based on the forwarding path.

In an optional implementation, when the identification information indicates the type of the candidate path in the SR policy, the identification information is carried in a field corresponding to a binding segment identifier BSID of the candidate path.

In an optional implementation, in a segment routing over internet protocol version 6 SRv6 network, the identification information is carried in a behavior field corresponding to the BSID of the candidate path.

In an optional implementation, in a segment routing-multiprotocol label switching SR-MPLS network, a BSID sub-type length value TLV includes a newly added BSID behavior field, and the identification information is carried in the behavior field; or the identification information is carried in a newly added BSID behavior sub-TLV.

In an optional implementation, the identification information is carried in a flag field or a reserved field in a BSID sub-TLV.

In an optional implementation, when the identification information indicates the type of the candidate path in the SR policy, the identification information is carried in a flag sub-TLV corresponding to the candidate path.

In an optional implementation, when the identification information indicates the type of the candidate path in the SR policy, the identification information is carried in a newly added indication field sub-TLV in the candidate path.

In an optional implementation, when the identification information indicates the type of the candidate path in the SR policy, the identification information is carried in association information of the SR policy.

In an optional implementation, the identification information is carried in a reserved field of a candidate path identifier sub-TLV corresponding to the association information.

In an optional implementation, the identification information is carried in a newly added association TLV of the association information.

It should be noted that, for implementation of each unit in this embodiment, refer to related descriptions in the method embodiment shown in FIG. 2 in the foregoing method embodiments, and details are not described in this embodiment again.

FIG. 12 shows a segment routing policy sending apparatus according to an embodiment of this application. The apparatus 1200 can implement a function of the foregoing controller, and includes an obtaining unit 1201 and a sending unit 1202.

The obtaining unit 1201 is configured to obtain an SR policy. The SR policy includes identification information, and the identification information indicates a type of at least one of the SR policy, a candidate path in the SR policy, and a segment list in the candidate path.

The sending unit 1202 is configured to send the SR policy to a first network device.

In an optional implementation, the type includes a multi-fed and selective receiving type, the multi-fed and selective receiving type indicates to determine at least two forwarding paths according to the SR policy, and the at least two forwarding paths are used to send a same service packet.

In an optional implementation, the type includes a composite type, and the composite type indicates that the SR policy includes nested sub-SR policies.

It should be noted that, for implementation of each unit in this embodiment, refer to related descriptions in the method embodiment in FIG. 10, and details are not described in this embodiment again.

For a specific implementation of each unit in this embodiment, refer to related descriptions in the foregoing method embodiments. In this embodiment of this application, division into the units is an example, and is merely a logical function division. In actual implementation, another division manner may be used. Functional units in embodiments of this application may be integrated into one processing unit, or each of the units may exist alone physically, or two or more units may be integrated into one unit. For example, in the foregoing embodiment, the processing unit and the sending unit may be a same unit, or may be different units. The integrated unit may be implemented in a form of hardware, or may be implemented in a form of a software functional unit.

FIG. 13 is a schematic diagram of a structure of a communication device according to an embodiment of this application. The communication device may be, for example, the first network device in the foregoing method embodiments, or may be implemented by the device of the apparatus 1100 in the embodiment shown in FIG. 11.

The communication device 1300 includes a processor 1310, a communication interface 1320, and a memory 1330. There may be one or more processors 1310 in the communication device 1300, and one processor is used as an example in FIG. 13. In this embodiment of this application, the processor 1310, the communication interface 1320, and the memory 1330 may be connected by using a bus system or in another manner. In FIG. 13, an example in which a bus system 1340 is used for connection is used.

The processor 1310 may be a CPU, an NP, or a combination of a CPU and an NP. The processor 1310 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field-programmable gate array, FPGA), a generic array logic (generic array logic, GAL), or any combination thereof.

The memory 1330 may include a volatile memory (volatile memory), for example, a random-access memory (random-access memory, RAM). The memory 1330 may also include a non-volatile memory (non-volatile memory), for example, a flash memory (flash memory), a hard disk drive (hard disk drive, HDD), or a solid-state drive (solid-state drive, SSD). The memory 1330 may also include a combination of memories of the foregoing types. The memory 1330 may store, for example, the segment routing SR policy mentioned above.

Optionally, the memory 1330 stores an operating system and a program, an executable module or a data structure, a subset thereof, or an extended set thereof. The program may include various operation instructions for implementing various operations. The operating system may include various system programs, to implement various basic services and process a hardware-based task. The processor 1310 may read a program in the memory 1330, to implement the segment routing policy processing method provided in this embodiment of this application.

The memory 1330 may be a storage component in the communication device 1300, or may be a storage apparatus independent of the communication device 1300.

The bus system 1340 may be a peripheral component interconnect (peripheral component interconnect, PCI) bus, an extended industry standard architecture (extended industry standard architecture, EISA) bus, or the like. The bus system 1340 may be classified into an address bus, a data bus, a control bus, and the like. For ease of description, the bus in FIG. 13 is represented by using only one bold line, but which does not indicate that there is only one bus or one type of bus.

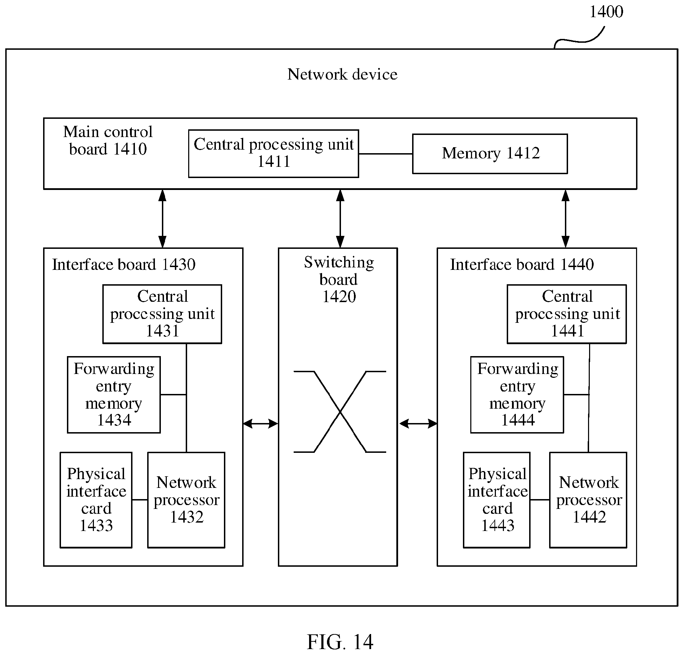

FIG. 14 is a schematic diagram of a structure of a network device 1400 according to an embodiment of this application. The network device may be, for example, the first network device in the foregoing method embodiments, or may be implemented by the device of the apparatus 1100 in the embodiment shown in FIG. 11.

The network device 1400 includes a main control board 1410 and an interface board 1430.

The main control board 1410 is also referred to as a main processing unit (main processing unit, MPU) or a route processing card (route processor card). The main control board 1410 controls and manages each component in the network device 1400, including functions of route calculation, device management, device maintenance, and protocol processing. The main control board 1410 includes a central processing unit 1411, and a memory 1412.

The interface board 1430 is also referred to as a line processing unit (line processing unit, LPU), a line card (line card), or a service board. The interface board 1430 is configured to provide various service interfaces and implement data packet forwarding. The service interface includes but is not limited to an Ethernet interface, a POS (Packet over SONET/SDH) interface, and the like. The Ethernet interface is, for example, a flexible Ethernet service interface (Flexible Ethernet Client, FlexE Client) interface. The interface board 1430 includes a central processing unit 1431, a network processor 1432, a forwarding entry memory 1434, and a physical interface card (physical interface card, PIC) 1433.

The central processing unit 1431 on the interface board 1430 is configured to control and manage the interface board 1430 and communicate with the central processing unit 1411 on the main control board 1410.

The network processor 1432 is configured to implement packet forwarding processing. A form of the network processor 1432 may be a forwarding chip. Specifically, processing on an uplink packet includes: processing an inbound interface of the packet, and searching the forwarding table. Processing of a downlink packet includes: searching the forwarding table, and the like.

The physical interface card 1433 is configured to implement a physical layer interconnection function. Original traffic enters the interface board 1430, and a processed packet is sent out from the physical interface card 1433. The physical interface card 1433 includes at least one physical interface. The physical interface is also referred to as a physical port. The physical interface card 1433, also referred to as a subcard, may be installed on the interface board 1430, and is responsible for converting an optical/electrical signal into a packet, performing validity check on the packet, and forwarding the packet to the network processor 1432 for processing. In some embodiments, the central processing unit 1431 on the interface board 1403 may also perform a function of the network processor 1432, for example, implement software forwarding based on a general-purpose CPU. In this case, the network processor 1432 is not required in the physical interface card 1433.

Optionally, the network device 1400 includes a plurality of interface boards. For example, the network device 1400 further includes an interface board 1440. The interface board 1440 includes a central processing unit 1441, a network processor 1442, a forwarding entry memory 1444, and a physical interface card 1443.

Optionally, the network device 1400 further includes a switching board 1420. The switching board 1420 may also be referred to as a switch fabric unit (switch fabric unit, SFU). When the network device has a plurality of interface boards 1430, the switching board 1420 is configured to complete data exchange between interface boards. For example, the interface board 1430 and the interface board 1440 may communicate with each other through the switching board 1420.

The main control board 1410 is coupled to the interface board 1430. For example, the main control board 1410, the interface board 1430, the interface board 1440, and the switching board 1420 are connected to a system backplane through a system bus to implement interworking. In a possible implementation, an inter-process communication protocol (inter-process communication, IPC) channel is established between the main control board 1410 and the interface board 1430, and the main control board 1410 and the interface board 1430 communicate with each other through the IPC channel.

Logically, the network device 1400 includes a control plane and a forwarding plane. The control plane includes the main control board 1410 and the central processing unit 1431. The forwarding plane includes components used for forwarding, for example, the forwarding entry memory 1434, the physical interface card 1433, and the network processor 1432. The control plane implements functions of a router, generating a forwarding table, processing signaling and protocol packets, and configuring and maintaining a status of a device. The control plane delivers a generated forwarding table to the forwarding plane. On the forwarding plane, the network processor 1432 performs table lookup and forwarding on a packet received by the physical interface card 1433 based on the forwarding table delivered by the control plane. The forwarding table delivered by the control plane may be stored in the forwarding entry memory 1434. In some embodiments, the control plane and the forwarding plane may be completely separated, and are not on a same device.

It should be understood that, in this embodiment of this application, an operation on the interface board 1440 is the same as an operation on the interface board 1430. For brevity, details are not described again. It should be understood that the network device 1400 in this embodiment may correspond to the first network device in the foregoing method embodiments. The main control board 1410, the interface board 1430, and/or the interface board 1440 in the network device 1400 may implement various steps in the foregoing method embodiments. For brevity, details are not described herein again.

It may be understood that, there may be one or more main control boards. When there are a plurality of main control boards, the main control boards may include an active main control board and a standby main control board. There may be one or more interface boards. A network device with a stronger data processing capability provides a larger quantity of interface boards. There may also be one or more physical interface cards on the interface board. There may be no switching board or one or more switching boards. When there are a plurality of switching boards, load balancing and redundancy backup may be implemented together. In a centralized forwarding architecture, a network device may not need a switching board, and an interface board performs a function of processing service data of an entire system. In a distributed forwarding architecture, a network device may have at least one switching board, and implements data exchange between a plurality of interface boards by using the switching board, to provide a large-capacity data exchange and processing capability. Therefore, a data access and processing capability of the network device in the distributed architecture is better than that of the device in the centralized architecture. Optionally, the network device may alternatively be in a form in which there is only one card. To be specific, there is no switching board, and functions of the interface board and the main control board are integrated on the card. In this case, a central processing unit on the interface board and a central processing unit on the main control board may be combined to form one central processing unit on the card, to perform functions obtained after the two central processing units are combined. This form of device (for example, a network device such as a low-end switch or a router) has a weak data exchange and processing capability. A specific architecture that is to be used depends on a specific networking deployment scenario.

In some possible embodiments, the network device may be implemented as a virtualized device. For example, the virtualized device may be a virtual machine (virtual machine, VM) on which a program having a packet sending function is run, and the virtual machine is deployed on a hardware device (for example, a physical server). The virtual machine is a complete software-simulated computer system that has complete hardware system functions and that runs in an entirely isolated environment. The virtual machine may be configured as the network device. For example, the virtual machine may implement a network device based on a general-purpose physical server in combination with a network functions virtualization (network functions virtualization, NFV) technology. The network device is a virtual host, a virtual router, or a virtual switch. By reading this application, a person skilled in the art may obtain, on the general-purpose physical server through virtualization with reference to the NFV technology, the network device having the foregoing functions. Details are not described herein.

It should be understood that the network devices in the foregoing various product forms have any function of the first network device in the foregoing method embodiments, and details are not described herein.

An embodiment of this application further provides a chip, including a processor and an interface circuit. The interface circuit is configured to receive instructions and transmit the instructions to the processor. The processor may be, for example, a specific implementation form of the segment routing policy processing apparatus 1100 shown in FIG. 11, and may be configured to perform the foregoing segment routing policy processing method. The processor is coupled to a memory. The memory is configured to store a program or instructions. When the program or the instructions are executed by the processor, the chip system is enabled to implement the method in any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), or a programmable controller (programmable logic device, PLD) or another integrated chip.

An embodiment of this application further provides a network system. The network system includes a controller and a first network device. The first network device is configured to perform the foregoing SR policy processing method, and the controller is configured to perform the foregoing SR policy sending method.

An embodiment of this application further provides a computer-readable storage medium, including instructions or a computer program. When the instructions or the computer program runs on a computer, the computer is enabled to perform the segment routing policy processing method provided in the foregoing embodiment.

An embodiment of this application further provides a computer program product, including instructions or a computer program. When the instructions or the computer program runs on a computer, the computer is enabled to perform the segment routing policy processing method provided in the foregoing embodiment.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the field that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical service division. In actual implementation, there may be another division manner. For example, a plurality of units or components may be combined or integrated into another system, or some features may be ignored or not performed. In addition, displayed or discussed mutual couplings or direct couplings or communication connections may be implemented through some interfaces. Indirect couplings or communication connections between the apparatuses or the units may be implemented in electrical, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, service units in embodiments of this application may be integrated into one processing unit, or each unit may exist alone physically, or two or more units may be integrated into one unit. The integrated unit may be implemented in a form of hardware, or may be implemented in a form of a software service unit.

When the integrated unit is implemented in a form of a software service unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, for example, a USB flash drive, a removable hard disk, a read-only memory (ROM, Read-Only Memory), a random access memory (RAM, Random Access Memory), a magnetic disk, or an optical disc.

A person skilled in the art should be aware that in the foregoing one or more examples, the services described in this application may be implemented by hardware, software, firmware, or any combination thereof. When implemented by software, these services may be stored in a computer-readable medium or transmitted as one or more instructions or code on the computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

In the foregoing specific implementations, the objectives, technical solutions, and the benefits of this application are further described in detail. It should be understood that the foregoing descriptions are merely specific implementations of this application.

The foregoing embodiments are merely used to describe the technical solutions of this application, but not to limit the technical solutions. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A segment routing policy processing method, wherein the method comprises:
obtaining, by a first network device, a segment routing SR policy, wherein the segment routing SR policy comprises identification information, and the identification information indicates a type of at least one of the SR policy, a candidate path in the SR policy, and a segment list in the candidate path; and
determining, by the first network device based on the identification information, a processing behavior corresponding to at least one of the SR policy, the candidate path in the SR policy, and the segment list in the candidate path.

2. The method according to claim 1, wherein the type comprises a multi-fed and selective receiving type, the multi-fed and selective receiving type indicates to determine at least two forwarding paths according to the SR policy, and the at least two forwarding paths are used to send a same service packet.

3. The method according to claim 2, wherein the determining, by the first network device based on the identification information, a processing behavior corresponding to at least one of the SR policy, the candidate path in the SR policy, and the segment list in the candidate path comprises:
determining, by the first network device based on the identification information, at least two forwarding paths from at least one of the SR policy, the candidate path in the SR policy, and the segment list in the candidate path;
replicating, by the first network device, a first service packet to obtain a second service packet; and
sending, by the first network device, the first service packet through a first forwarding path in the at least two forwarding paths, and sending the second service packet through a second forwarding path in the at least two forwarding paths.

4. The method according to claim 3, wherein the first network device is an intermediate node on a forwarding path, and the sending, by the first network device, the first service packet through a first forwarding path in the at least two forwarding paths, and sending the second service packet through a second forwarding path in the at least two forwarding paths comprises:
encapsulating, by the first network device, path information of the first forwarding path into the first service packet, and encapsulating path information of the second forwarding path into the second service packet; and
sending, by the first network device, the encapsulated first service packet through the first forwarding path, and sending the encapsulated second service packet through the second forwarding path.

5. The method according to claim 4, wherein the encapsulating, by the first network device, path information of the first forwarding path into the first service packet, and encapsulating path information of the second forwarding path into the second service packet comprises:
encapsulating, by the first network device, a first packet header into an outer layer of the first service packet, wherein the first packet header comprises the path information of the first forwarding path; and
encapsulating, by the first network device, a second packet header into an outer layer of the second service packet, wherein the second packet header comprises the path information of the second forwarding path; or
inserting, by the first network device, the path information of the first forwarding path into a segment routing header SRH of the first service packet; and
inserting, by the first network device, the path information of the second forwarding path into an SRH of the second service packet.

6. The method according to any one of claims 2 to 5, wherein when the identification information indicates that the type of the SR policy is the multi-fed and selective receiving type, the at least two forwarding paths are at least two candidate paths in the SR policy;
when the identification information indicates that the type of the candidate path in the SR policy is the multi-fed and selective receiving type and each of at least two candidate paths in the SR policy corresponds to the identification information, the at least two forwarding paths are the at least two candidate paths in the SR policy;
when the identification information indicates that the type of the candidate path in the SR policy is the multi-fed and selective receiving type and one candidate path in the SR policy corresponds to the identification information, the at least two forwarding paths are paths corresponding to at least two segment lists in the candidate path in the SR policy; or
when the identification information indicates that the type of the segment list in the candidate path in the SR policy is the multi-fed and selective receiving type and each of at least two segment lists in the candidate path corresponds to the identification information, the at least two forwarding paths are paths corresponding to the at least two segment lists.

7. The method according to claim 1, wherein the type comprises a composite type, and the composite type indicates that the SR policy comprises nested sub-SR policies.

8. The method according to claim 7, wherein the determining, by the first network device based on the identification information, a processing behavior corresponding to at least one of the SR policy, the candidate path, and the segment list comprises:
determining, by the first network device based on the identification information, a forwarding path from a sub-SR policy corresponding to at least one of the SR policy, the candidate path in the SR policy, and the segment list in the candidate path; and
sending, by the first network device, a service packet based on the forwarding path.

9. The method according to any one of claims 1 to 8, wherein when the identification information indicates the type of the candidate path in the SR policy, the identification information is carried in a field corresponding to a binding segment identifier BSID of the candidate path.

10. The method according to claim 9, wherein in a segment routing over internet protocol version 6 SRv6 network, the identification information is carried in a behavior field corresponding to the BSID of the candidate path.

11. The method according to claim 9, wherein in a segment routing-multiprotocol label switching SR-MPLS network, a BSID sub-type length value TLV comprises a newly added BSID behavior field, and the identification information is carried in the behavior field; or the identification information is carried in a newly added BSID behavior sub-TLV.

12. The method according to claim 9, wherein the identification information is carried in a flag field or a reserved field in a BSID sub-TLV.

13. The method according to any one of claims 1 to 8, wherein when the identification information indicates the type of the candidate path in the SR policy, the identification information is carried in a flag sub-TLV corresponding to the candidate path.

14. The method according to any one of claims 1 to 8, wherein when the identification information indicates the type of the candidate path in the SR policy, the identification information is carried in a newly added indication field sub-TLV in the candidate path.

15. The method according to any one of claims 1 to 8, wherein when the identification information indicates the type of the candidate path in the SR policy, the identification information is carried in association information of the SR policy.

16. The method according to claim 15, wherein the identification information is carried in a reserved field of a candidate path identifier sub-TLV corresponding to the association information.

17. The method according to claim 15, wherein the identification information is carried in a newly added association TLV of the association information.

18. A segment routing policy processing apparatus, wherein the apparatus comprises:
an obtaining unit, configured to obtain a segment routing SR policy, wherein the segment routing SR policy comprises identification information, and the identification information indicates a type of at least one of the SR policy, a candidate path in the SR policy, and a segment list in the candidate path; and
a determining unit, configured to determine, by a first network device based on the identification information, a processing behavior corresponding to at least one of the SR policy, the candidate path in the SR policy, and the segment list in the candidate path.

19. The apparatus according to claim 18, wherein the type comprises a multi-fed and selective receiving type, the multi-fed and selective receiving type indicates to determine at least two forwarding paths according to the SR policy, and the at least two forwarding paths are used to send a same service packet.

20. The apparatus according to claim 19, wherein the determining unit comprises:
a determining subunit, configured to determine, based on the identification information, the at least two forwarding paths from at least one of the SR policy, the candidate path in the SR policy, and the segment list in the candidate path;
a replicating subunit, configured to replicate a first service packet to obtain a second service packet; and
a sending subunit, configured to send the first service packet through a first forwarding path in the at least two forwarding paths, and send the second service packet through a second forwarding path in the at least two forwarding paths.

21. The apparatus according to claim 20, wherein a device on which the apparatus is located is an intermediate node on a forwarding path, and the sending subunit is specifically configured to: encapsulate path information of the first forwarding path into the first service packet, and encapsulate path information of the second forwarding path into the second service packet; and send the encapsulated first service packet through the first forwarding path, and send the encapsulated second service packet through the second forwarding path.

22. The apparatus according to claim 21, wherein the sending subunit is specifically configured to: encapsulate a first packet header into an outer layer of the first service packet, wherein the first packet header comprises the path information of the first forwarding path; and encapsulate a second packet header into an outer layer of the second service packet, wherein the second packet header comprises the path information of the second forwarding path; or insert the path information of the first forwarding path into a segment routing header SRH of the first service packet; and insert the path information of the second forwarding path into an SRH of the second service packet.

23. The apparatus according to any one of claims 19 to 22, wherein when the identification information indicates that the type of the SR policy is the multi-fed and selective receiving type, the at least two forwarding paths are at least two candidate paths in the SR policy;
when the identification information indicates that the type of the candidate path in the SR policy is the multi-fed and selective receiving type and each of at least two candidate paths in the SR policy corresponds to the identification information, the at least two forwarding paths are the at least two candidate paths in the SR policy;
when the identification information indicates that the type of the candidate path in the SR policy is the multi-fed and selective receiving type and one candidate path in the SR policy corresponds to the identification information, the at least two forwarding paths are paths corresponding to at least two segment lists in the candidate path in the SR policy; or
when the identification information indicates that the type of the segment list in the candidate path in the SR policy is the multi-fed and selective receiving type and each of at least two segment lists in the candidate path corresponds to the identification information, the at least two forwarding paths are paths corresponding to the at least two segment lists.

24. The apparatus according to claim 18, wherein the type comprises a composite type, and the composite type indicates that the SR policy comprises nested sub-SR policies.

25. The apparatus according to claim 24, wherein the determining unit is specifically configured to: determine, based on the identification information, a forwarding path from a sub-SR policy corresponding to at least one of the SR policy, the candidate path in the SR policy, and the segment list in the candidate path; and send a service packet based on the forwarding path.

26. The apparatus according to any one of claims 18 to 25, wherein when the identification information indicates the type of the candidate path in the SR policy, the identification information is carried in a field corresponding to a binding segment identifier BSID of the candidate path.

27. The apparatus according to claim 26, wherein in a segment routing over internet protocol version 6 SRv6 network, the identification information is carried in a behavior field corresponding to the BSID of the candidate path.

28. The apparatus according to claim 26, wherein in a segment routing-multiprotocol label switching SR-MPLS network, a BSID sub-type length value TLV comprises a newly added BSID behavior field, and the identification information is carried in the behavior field; or the identification information is carried in a newly added BSID behavior sub-TLV.

29. The apparatus according to claim 26, wherein the identification information is carried in a flag field or a reserved field in a BSID sub-TLV.

30. The apparatus according to any one of claims 18 to 25, wherein when the identification information indicates the type of the candidate path in the SR policy, the identification information is carried in a flag sub-TLV corresponding to the candidate path.

31. The apparatus according to any one of claims 18 to 25, wherein when the identification information indicates the type of the candidate path in the SR policy, the identification information is carried in a newly added indication field sub-TLV in the candidate path.

32. The apparatus according to any one of claims 18 to 25, wherein when the identification information indicates the type of the candidate path in the SR policy, the identification information is carried in association information of the SR policy.

33. The apparatus according to claim 32, wherein the identification information is carried in a reserved field of a candidate path identifier sub-TLV corresponding to the association information.

34. The apparatus according to claim 32, wherein the identification information is carried in a newly added association TLV of the association information.

35. A network device, wherein the device comprises a processor and a memory, wherein
the memory is configured to store instructions or a computer program; and
the processor is configured to execute the instructions or the computer program in the memory, to enable the network device to perform the method according to any one of claims 1 to 17.

36. A computer-readable storage medium, comprising instructions, wherein when the instructions are run on a processor, the method according to any one of claims 1 to 17 is implemented.
